# EUROPEAN PATENT APPLICATION

(11) **EP 4 601 055 A1**
(43) Date of publication of application: **13.08.2025**
(21) Application number: 22961402.9
(22) Date of filing: 05.10.2022
(51) Int. Cl.: H01M 8/04, H01M 8/249

(54) **STATIONARY FUEL CELL SYSTEM**

(71) Applicant: Nissan Motor Co., Ltd., Kanagawa 221-0023 (JP)
(72) Inventor: ISODA, Hiroyuki, Atsugi-shi, Kanagawa 243-0123 (JP); USUDA, Masahiro, Atsugi-shi, Kanagawa 243-0123 (JP); NODA, Tetsushi, Atsugi-shi, Kanagawa 243-0123 (JP)
(74) Representative: Grünecker Patent- und Rechtsanwälte PartG mbB
(86) International application number: PCT/JP2022/037281
(87) International publication number: WO 2024/075214

(57) **Abstract**

A stationary fuel cell system comprising, two power generation modules stacked and disposed in an up-down direction, each of the two power generation modules including an auxiliary machine structure including an auxiliary machine that receives and transmits gas from and to a fuel cell stack, a first fuel cell stack connected to one face of the auxiliary machine structure in the up-down direction, and a second fuel cell stack connected to the other face of the auxiliary machine structure in the up-down direction and having a smaller dimension in the up-down direction than the first fuel cell stack, wherein the second fuel cell stack of the upper power generation module is connected to a lower face of the auxiliary machine structure of the upper power generation module, and the second fuel cell stack of the lower power generation module is connected to an upper face of the auxiliary machine structure of the lower power generation module.

## Description

### TECHNICAL FIELD

The present invention relates to a stationary fuel cell system.

### BACKGROUND ART

JPH02-37453U discloses a stationary fuel cell system in which cylindrical casings that accommodate a plurality of fuel cell stacks are vertically stacked in two stages. In each cylindrical casing, an intake pipe through which air to be supplied to a fuel cell stack flows, an exhaust pipe through which gas discharged from the fuel cell stack flows, a fuel pipe through which fuel to be supplied to the fuel cell stack flows, and the like are all disposed at different heights on a side face of the fuel cell stack.

### SUMMARY OF INVENTION

Incidentally, a fuel cell system requires operations for inspection, maintenance, and the like. In a configuration described in the above document, there is a problem in that, with respect to a pipe disposed at a high position in the cylindrical casing of an upper stage and a pipe disposed at a low position in the cylindrical casing of a lower stage, an operator needs to stretch or bend down during the above operations, which results in deteriorated operability.

Therefore, an object of the present invention is to provide a fuel cell system that allows an operator to operate without greatly changing an operation posture.

According to one aspect of the present invention, there is provided a stationary fuel cell system including: two power generation modules stacked and disposed in an up-down direction, each of the two power generation modules including an auxiliary machine structure including an auxiliary machine that receives and transmits gas from and to a fuel cell stack, a first fuel cell stack connected to one face of the auxiliary machine structure in the up-down direction, and a second fuel cell stack connected to the other face of the auxiliary machine structure in the up-down direction and having a smaller dimension in the up-down direction than the first fuel cell stack. In the system, the second fuel cell stack of the upper power generation module is connected to a lower face of the auxiliary machine structure of the upper power generation module, and the second fuel cell stack of the lower power generation module is connected to an upper face of the auxiliary machine structure of the lower power generation module.

### BRIEF DESCRIPTION OF DRAWINGS

[FIG. 1] FIG. 1 is a perspective view illustrating a schematic configuration of a stationary fuel cell system.
[FIG. 2] FIG. 2 is a front view of the stationary fuel cell system.
[FIG. 3] FIG. 3 is a rear view of the stationary fuel cell system.
[FIG. 4] FIG. 4 is a left side view of the stationary fuel cell system.
[FIG. 5] FIG. 5 is a diagram illustrating fuel system components extracted from the stationary fuel cell system.
[FIG. 6] FIG. 6 is a view of a pair of cross members and a power generation module in a state before assembly, viewed from a rear side.
[FIG. 7] FIG. 7 is a front view of a power generation plant using the fuel cell system in FIG. 1.

### DESCRIPTION OF EMBODIMENTS

Hereinafter, an embodiment of the present invention will be described with reference to the drawings.

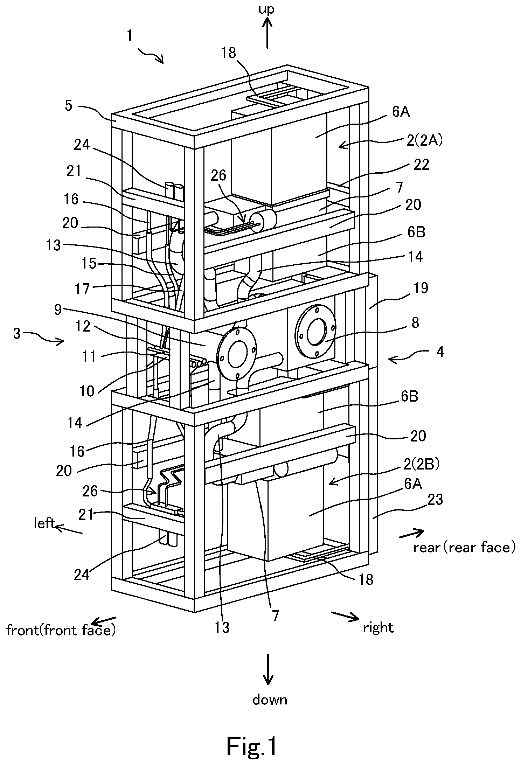

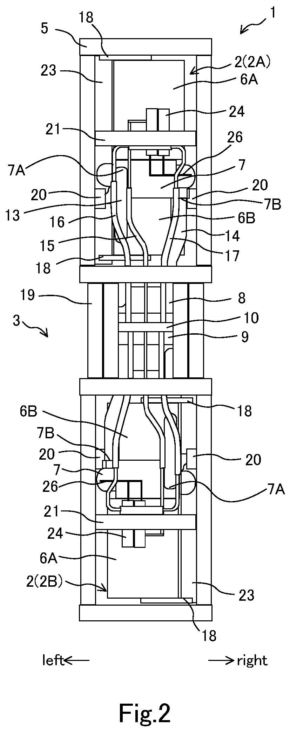

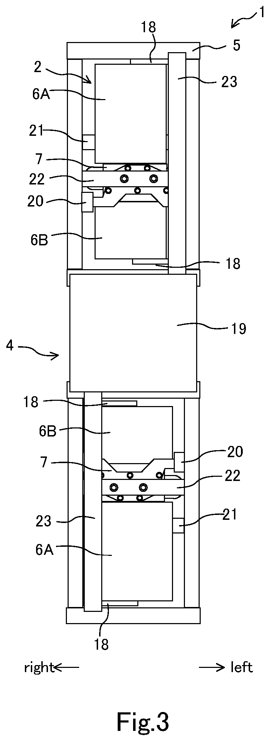

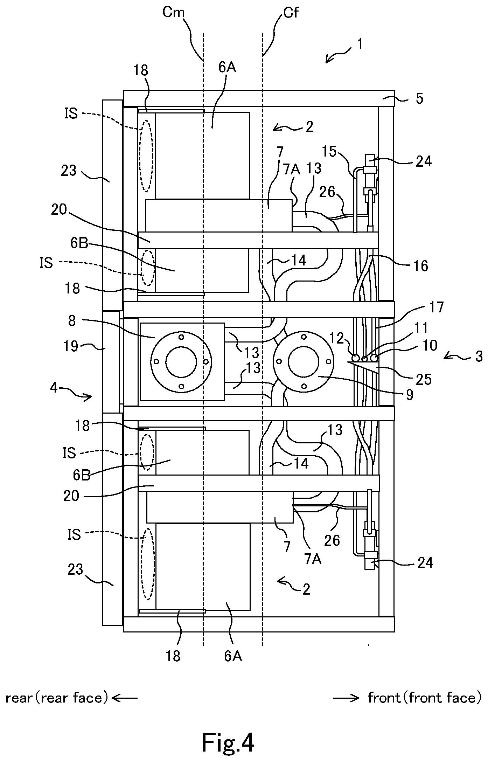

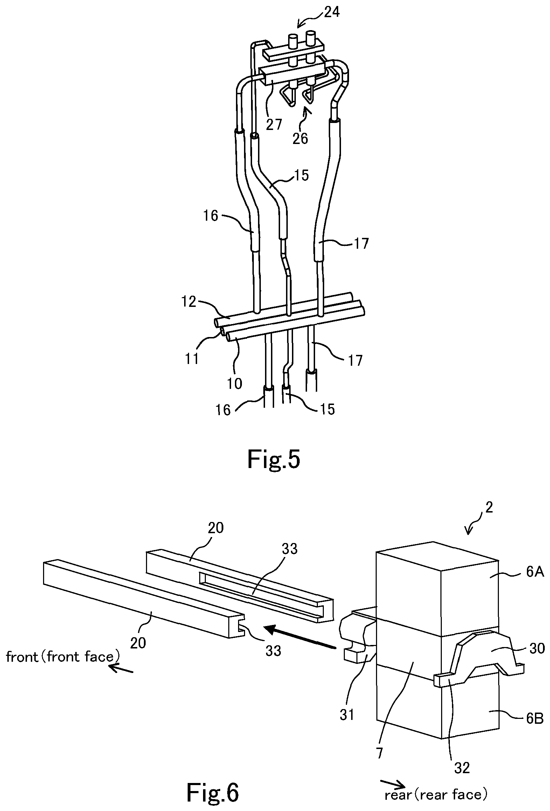

FIG. 1 is a perspective view illustrating a schematic configuration of a stationary fuel cell system (hereinafter, simply referred to as a fuel cell system) 1 according to the embodiment of the present invention. FIG. 2 is a front view of the fuel cell system 1. FIG. 3 is a rear view of the fuel cell system 1. FIG. 4 is a left side view of the fuel cell system 1. FIG. 5 is a diagram illustrating fuel system components extracted from the fuel cell system 1. In the present embodiment, a height direction of the fuel cell system 1 is defined as an up-down direction, a flow path direction of an intake pipe 8, an exhaust pipe 9, and the like described later is defined as a left-right direction, and a direction orthogonal to the up-down direction and the left-right direction is defined as a front-rear direction. Further, in the front-rear direction, a side of an auxiliary machine structure 7 to which connections with respective pipes 13, 14 described later are provided is defined as a front (front face). The left-right direction is defined based on a front view.

The fuel cell system 1 according to the present embodiment is used for stationary use. A fuel cell used in the fuel cell system 1 is a solid oxide fuel cell.

The fuel cell system 1 includes two power generation modules 2, one pipe module 3, one power recovery module 4, and a frame body 5 that supports them.

The power generation module 2 includes the auxiliary machine structure 7, a first fuel cell stack 6A disposed on one face of the auxiliary machine structure 7 in the up-down direction, and a second fuel cell stack 6B disposed on the other face thereof. A fuel cell stack 6 is formed by laminating a plurality of unit cells in the up-down direction. A dimension of the first fuel cell stack 6A in the up-down direction is larger than a dimension of the second fuel cell stack 6B in the up-down direction. That is, the first fuel cell stack 6A has a larger number of laminated unit cells than the second fuel cell stack 6B.

When there is no need to distinguish between the first fuel cell stack 6A and the second fuel cell stack 6B, the first fuel cell stack 6A and the second fuel cell stack 6B are referred to as the fuel cell stack 6. In the present embodiment, a configuration in which the fuel cell stacks 6 are disposed on both faces of the auxiliary machine structure 7 in the up-down direction will be described. However, a configuration in which the fuel cell stack 6 is disposed on only one of the faces may be used.

The auxiliary machine structure 7 is a housing including an auxiliary machine (for example, a heat exchanger or a combustor) that receives and transmits gas from and to the fuel cell stack 6.

The power generation module 2 includes a fuel injection unit 24 that injects fuel to be supplied to the fuel cell stack 6 of the power generation module 2. Although the fuel injection unit 24 according to the present embodiment includes two fuel injection valves, the number of fuel injection valves is not limited to this.

The pipe module 3 includes the intake pipe 8 through which air to be supplied to the power generation module 2 flows, the exhaust pipe 9 through which gas discharged from the power generation module 2 flows, a fuel pipe 11 through which fuel to be supplied to the power generation module 2 flows, and injection unit cooling water pipes 10, 12 through which cooling water for cooling the fuel injection unit 24 flows. The injection unit cooling water pipes 10, 12 may be simply referred to as "cooling water pipes 10, 12" in the following description. The cooling water pipe 12 may be referred to as an inlet cooling water pipe 12, and the cooling water pipe 10 may be referred to as an outlet cooling water pipe 10.

The power recovery module 4 includes a power box 19 that accommodates equipment and wirings for recovering power generated by the power generation module 2 and transmitting the recovered power to a power converter 43 described later, and equipment and wirings for drawing in power required to drive auxiliary machines or the like from external equipment.

The frame body 5 includes a plurality of frame members, a cross member 20, and first and second stays 21, 22, which are disposed to surround the two power generation modules 2 and one pipe module 3.

Inside the frame body 5, the two power generation modules 2 are stacked and disposed in the up-down direction, and the pipe module 3 is disposed therebetween. Hereinafter, when there is a need to distinguish between the upper and lower power generation modules 2, the upper one is referred to as an upper power generation module 2A, and the lower one is referred to as a lower power generation module 2B.

By stacking and disposing the two power generation modules 2 in the up-down direction, an area required to install the fuel cell system 1 can be made smaller than that in a configuration in which the two power generation modules 2 are installed on the same face (hereinafter, also referred to as horizontal placement). Further, in a case of the horizontal placement, pipes such as the intake pipe 8 and the exhaust pipe 9 are disposed between the adjacent power generation modules 2, and pipes branched from the pipes to the respective auxiliary machine structure 7 are installed. In contrast, in the fuel cell system 1 according to the present embodiment, since the pipe module 3 is disposed between the power generation modules 2 stacked and disposed in the up-down direction, an area occupied by the pipes is smaller than that in the horizontal placement when viewed from above. That is, according to the fuel cell system 1 of the present embodiment, the area required to install the fuel cell system 1, which includes the plurality of power generation modules 2, can be further reduced.

The frame body 5 includes, for example, an upper portion that surrounds the upper power generation module 2A, a lower portion that surrounds the lower power generation module 2B, and an intermediate portion that surrounds the pipe module 3. The upper portion includes at least twelve frame members assembled in a box shape to surround the upper power generation module 2A, the cross member 20 disposed to cross left and right side faces defined by the frame members in the front-rear direction, and the first stay 22 and the second stay 21 disposed to cross front and rear side faces (that is, a front face and a rear face) defined by the frame members in the left-right direction. The lower portion has the same configuration as the upper portion. The intermediate portion includes at least four frame members that connect the upper portion and the lower portion at predetermined intervals in the up-down direction.

The upper power generation module 2A is in a state in which the first fuel cell stack 6A is disposed above the auxiliary machine structure 7, and the second fuel cell stack 6B is disposed below the auxiliary machine structure 7. Hereinafter, this state is also referred to as an upright state. On the other hand, the lower power generation module 2B has the same structure as the upper power generation module 2A and is in a state in which the first fuel cell stack 6A is disposed below the auxiliary machine structure 7, and the second fuel cell stack 6B is disposed above the auxiliary machine structure 7. That is, the lower power generation module 2B is in a state in which the upper power generation module 2A is turned upside down about an axis extending in the front-rear direction. Hereinafter, this state is also referred to as an inverted state. A portion of the frame body 5 that surrounds the upper power generation module 2A and a portion of the frame body 5 that surrounds the lower power generation module 2B are also in a relationship of having the same structure but inverted upside down. In this way, by using two power generation modules 2 having the same structure with one in the upright state and the other in the inverted state, cost can be reduced as compared with a case of using a plurality of types of power generation modules 2. Further, by using the same structure for the upper and lower portions, the same shapes and dimensions can be used for respective pipes and respective wirings between the pipe module 3 and the power generation module 2, which also reduces the cost.

The two power generation modules 2 are disposed at positions where a center axis Cm thereof in the front-rear direction is offset toward a rear side with respect to a center axis Cf of the frame body 5 in the front-rear direction (see FIG. 4). The power generation module 2 is fixedly supported by a pair of cross members 20 provided on a right side face and a left side face of the frame body 5 and the first stay 22 provided on a rear face of the frame body 5. The cross member 20 connects a pair of frame members extending in the up-down direction among the frame members that define the left and right side faces of the frame body. The first stay 22 connects a pair of frame members that define the rear face of the frame body 5. A method of fixing the power generation module 2 to the frame body 5 will be described later.

Each pipe of the pipe module 3 is disposed such that a direction of a flow path is the left-right direction of the frame body 5. The intake pipe 8 and the exhaust pipe 9 are supported by the frame body 5 via stays (not illustrated) or the like. The fuel pipe 11 and the cooling water pipes 10, 12 are supported by a bracket 25 provided on the frame body 5.

Flanges are provided at both ends of the intake pipe 8 and the exhaust pipe 9 in the left-right direction. When a plurality of the fuel cell systems 1 are coupled in the left-right direction as described later, the flanges are fastened by bolts or the like.

Both ends of the fuel pipe 11 and the cooling water pipes 10, 12 are provided with ribs (not illustrated). When the plurality of fuel cell systems 1 are coupled in the left-right direction, the fuel pipes 11 and the cooling water pipes 10, 12 of the adjacent fuel cell systems 1 are connected via rubber pipes (not illustrated) or the like.

The intake pipe 8 and the power generation module 2 are connected via an intake branch pipe 13. More specifically, the intake branch pipe 13 branched from the intake pipe 8 is connected to an intake port 7A provided in the auxiliary machine structure 7.

The exhaust pipe 9 and the power generation module 2 are connected via the exhaust branch pipe 14. More specifically, the exhaust branch pipe 14 branched from the exhaust pipe 9 is connected to an exhaust port 7B provided in the auxiliary machine structure 7.

As described above, the upper power generation module 2A is in the upright state, the lower power generation module 2B is in the inverted state, and the pipe module 3 is disposed between the two power generation modules 2. Accordingly, in both the power generation modules 2, the second fuel cell stack 6B having a shorter dimension in the up-down direction than the first fuel cell stack 6A is disposed closer to the pipe module 3. In other words, a distance from the pipe module 3 to each auxiliary machine structure 7 is shorter than that in a case in which the upper power generation module 2A is in the inverted state and the lower power generation module 2B is in the upright state.

The intake port 7A and the exhaust port 7B are disposed on a front side of the auxiliary machine structure 7 in a top view. As described above, the power generation module 2 is located at a position offset toward the rear side with respect to the frame body 5. Therefore, distances between the intake port 7A, the exhaust port 7B, and the frame body 5 are secured, creating more room for routing the intake branch pipe 13 and the exhaust branch pipe 14.

If either the intake port 7A or the exhaust port 7B is disposed on the rear side of the auxiliary machine structure 7 in the top view, an amount by which the power generation module 2 can be offset toward the rear side is limited due to presence of a pipe connected thereto. As a result, wasted spaces are generated on the front side and the rear side. On the other hand, in the fuel cell system 1 according to the present embodiment, since the intake port 7A and the exhaust port 7B are consolidated on the front side, a rear face of the power generation module 2 can be brought closer to a rear face of the frame body 5. That is, according to the present embodiment, wasted spaces generated between the rear face of the frame body 5 and the rear face of the power generation module 2 (IS in FIG. 4) can be further reduced.

In the upper power generation module 2A, the intake port 7A is disposed on a left side and the exhaust port 7B is disposed on a right side in the front view. On the other hand, in the lower power generation module 2B, the intake port 7A is disposed on the right side and the exhaust port 7B is disposed on the left side in the front view. That is, arrangements of the intake ports 7A and the exhaust ports 7B are reversed between the upper power generation module 2A and the lower power generation module 2B. Accordingly, a position of a connection portion of the intake pipe 8 with the intake branch pipe 13 for the upper power generation module 2A and a position of a connection portion of the intake pipe 8 with the intake branch pipe 13 for the lower power generation module 2B can be shifted in the left-right direction. The intake branch pipe 13 is equipped with accessory devices such as a control valve, a shutoff valve, and an actuator that drives each valve body (none of which are illustrated). However, by shifting the positions of the two connection portions in the left-right direction in this way, positions of the accessory devices can be dispersed, creating more room for routing the two intake branch pipes 13. Further, when the two connection portions are located close to each other, a problem such as air being less likely to flow to either of the intake branch pipes 13 may occur. However, the problem can be solved by shifting the positions of the two connection portions in the left-right direction as described above. The same applies to connection portions of the exhaust pipe 9 with the two exhaust branch pipes 14.

In the present embodiment, since the power generation modules 2 having the same structure are used in the upright state and the inverted state, it is natural that the arrangements of the intake ports 7A and the exhaust ports 7B are reversed as described above. However, even in a case in which two power generation modules 2 having different structures are used, the arrangements of the intake ports 7A and the exhaust ports 7B are reversed between the upper power generation module 2A and the lower power generation module 2B to solve the above problem.

Incidentally, when the fuel cell system 1 is used in a power generation plant or the like, maintenance and inspection operations such as confirmation of presence or absence of leakage from each pipe and replacement of consumables or defective parts are required. In the fuel cell system 1 according to the present embodiment, since the power generation module 2 is disposed offset toward the rear side with respect to the frame body 5, and the intake ports 7A and the exhaust ports 7B of the upper and lower power generation modules 2 are all disposed on the front side, accessory devices such as the shutoff valve (not illustrated) included in the pipe module 3 can also be consolidated on the front side. Therefore, according to the fuel cell system 1 of the present embodiment, an amount of movement of an operator during maintenance and inspection operations is reduced, and operation efficiency can be improved.

Further, during the maintenance and inspection operations, when a position of a portion to be operated is low, the operator needs to bend down or, in some cases, lie down. In contrast, when the position of the portion to be operated is high, the operator needs to stretch or stand on a step stool. In either case, it is a factor of deteriorating operability. However, in the fuel cell system 1 according to the present embodiment, the upper power generation module 2A is in the upright state, the lower power generation module 2B is in the inverted state, and the pipe module 3 is disposed between the two power generation modules 2. Accordingly, positions of the auxiliary machine structures 7 of the upper and lower power generation modules 2 are brought closer to a center of the fuel cell system 1 in the up-down direction, and thus deterioration of operability can be prevented.

As a result of investigation by the inventors, it has been found that the deterioration of operability due to the above change in posture of the operator can be prevented when a height of the portion to be operated from an installation face is in a range of about 400 mm to 1500 mm. Therefore, although dimensions of the power generation module 2 and the frame body 5 can be set as desired, from a viewpoint of the above operability, the dimensions of the power generation module 2 and the frame body 5 are set such that heights of the intake ports 7A and the exhaust ports 7B of the upper and lower power generation modules 2 from the installation face are within the range of 400 mm to 1500 mm.

The fuel injection unit 24 is fixedly supported by the second stay 21 provided on a front face of the frame body 5. Fuel is supplied from the fuel pipe 11 to the fuel injection unit 24 via a fuel branch pipe 15, and is supplied from the fuel injection unit 24 to the power generation module 2 via a fuel supply pipe 26. The fuel injection unit 24 includes a cooling water gallery 27 that surrounds an injection portion of the fuel injection valve. The cooling water gallery 27 and the inlet cooling water pipe 12 are connected by a first cooling water branch pipe 16, and the cooling water gallery 27 and the outlet cooling water pipe 10 are connected by a second cooling water branch pipe 17. That is, cooling water is supplied from the inlet cooling water pipe 12 to the cooling water gallery 27 via the first cooling water branch pipe 16, cools the fuel injection valve there, and flows into the outlet cooling water pipe 10 via the second cooling water branch pipe 17.

The power box 19 is disposed between the upper and lower power generation modules 2 on the rear face of the frame body 5. The power generation module 2 and the power box 19 are electrically connected via a bus bar 18. The bus bars 18 are taken out from faces of the fuel cell stack 6 that are opposite to a face in contact with the auxiliary machine structure 7, and are connected to the power box 19 through wiring passages 23 provided along the frame members of the frame body 5.

When two power generation modules 2 are horizontally placed, there is a need to provide a space for installing the power box 19 separately from installation spaces for the power generation modules 2. However, according to the configuration of the present embodiment, there is no need to provide the space. That is, the area required to install the fuel cell system 1 can be reduced.

Next, a method of attaching the power generation module 2 to the frame body 5 will be described with reference to FIG. 6.

FIG. 6 is a view of the pair of cross members 20 and the power generation module 2 in a state before assembly, viewed from the rear side. At this stage, the first stay 22 is not attached to the frame body 5.

Facing faces of the pair of cross members 20 are provided with guide grooves 33 whose end portions on at least the rear side are open ends. The auxiliary machine structure 7 of the power generation module 2 is provided with a first slide portion 31 and a second slide portion 32 having shapes corresponding to the guide grooves 33. In FIG. 6, a slide member 30 including the second slide portion 32 is formed separately from the auxiliary machine structure 7 and is attached to the auxiliary machine structure 7. However, the second slide portion 32 may be formed integrally with the housing of the auxiliary machine structure 7.

Then, the rear face of the frame body 5 is used as an insertion face, and the power generation module 2 is moved from this insertion face along the guide groove 33 with the first slide portion 31 and the second slide portion 32, thereby inserting the power generation module 2 into the frame body 5. After the insertion, the power generation module 2 and the frame body 5 are rigidly connected using the first stay 22. Accordingly, the power generation module 2 is fixed to the frame body 5. At this time, if the guide groove 33 is provided from one end to the other end of the cross member 20, there is a need to position the power generation module 2 by inserting the power generation module 2 into the frame body 5 while checking the position of the power generation module 2. However, in the present embodiment, a position of the end portion of the guide groove 33 on the front side is aligned with a position of the first slide portion 31 when the power generation module 2 is appropriately positioned. Accordingly, positioning is easier. Further, since the insertion face is on the rear side, and the connection portions between the auxiliary machine structure 7 and respective pipes are on the front side of the auxiliary machine structure 7, the power generation module 2 can be removed from the frame body 5 by releasing connections with the respective pipes. That is, there is no need to remove the respective pipes from the frame body 5 when the power generation module 2 is replaced.

When the power generation module 2 is fixed to the frame body 5 as described above, the power generation module 2, in particular, the auxiliary machine structure 7 also functions as a structural member that connects the pair of cross members 20 provided on the left and right side faces of the frame body 5. The upper portion of the frame body 5 has face rigidity reinforced by the pair of cross members 20 on the left and right side faces, the second stay 21 on the front face and the second stay 21 on the back face, and the auxiliary machine structure 7 functions as a structural member that crosses the left and right side faces, improving rigidity of the entire upper portion. The same applies to the lower portion. Accordingly, deformation or collapse due to an external force such as an earthquake can be prevented.

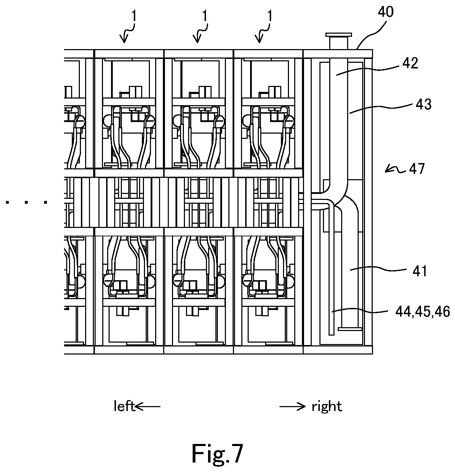

Next, a power generation plant using the fuel cell system 1 will be described with reference to FIG. 7.

FIG. 7 is a front view of the power generation plant using the fuel cell system 1.

As illustrated in the drawing, a plurality of fuel cell systems 1 are disposed adjacent to each other in the left-right direction, and the respective frame bodies 5 are rigidly connected to each other by bolts or the like. Accordingly, the pair of rigidly connected frame members function as reinforcing members, and deformation of the frame body 5 is prevented. The intake pipes 8, the exhaust pipes 9, the fuel pipes 11, and the cooling water pipes 10, 12 of the respective fuel cell systems 1 are also coupled. The intake pipes 8 of the adjacent fuel cell systems 1 are coupled directly or via a pipe serving as a joint. The same applies to the exhaust pipe 9. The fuel pipes 11 and the cooling water pipes 10, 12 of the adjacent fuel cell systems 1 are coupled via pipes serving as joints (for example, rubber pipes). As a result, the linearly coupled intake pipes 8, exhaust pipes 9, fuel pipes 11, and cooling water pipes 10, 12 are disposed between a row of the upper power generation modules 2A and a row of the lower power generation modules 2B. Further, the wirings accommodated in the power boxes 19 of the adjacent fuel cell systems 1 are electrically connected.

As described above, since the coupled intake pipes 8, exhaust pipes 9, fuel pipes 11, and cooling water pipes 10, 12 are linear, pressure loss can be prevented as compared with a case in which a bent portion is present. In addition, since all of these pipes can be accessed from the front side, operability is excellent.

A second frame body 40 is coupled to one end portion in the left-right direction (right end in FIG. 7) of a row in which a plurality of fuel cell systems 1 are coupled (hereinafter, also referred to as a fuel cell row). An intake inlet pipe 41 having one end connected to the intake pipe 8, an exhaust outlet pipe 42 having one end connected to the exhaust pipe 9, a power converter 43, a fuel inlet pipe 45 having one end connected to the fuel pipe 11, a cooling water inlet pipe 44 having one end connected to the cooling water pipe 10, and a cooling water outlet pipe 46 having one end connected to the cooling water pipe 12 are fixedly supported by the second frame body 40. Hereinafter, the second frame body 40, the intake inlet pipe 41, the exhaust outlet pipe 42, the power converter 43, the fuel inlet pipe 45, the cooling water inlet pipe 44, and the cooling water outlet pipe 46 are collectively referred to as an external connection module 47.

At the other end portion of the fuel cell row in the left-right direction, openings of the intake pipe 8, the exhaust pipe 9, and the fuel pipe 11 are closed by lids or plugs. An end of the cooling water pipe 10 and an end of the cooling water pipe 12 are connected.

The other end of the intake inlet pipe 41 is connected to intake equipment (not illustrated) that is provided outside the fuel cell row and includes a blower or the like. The other end of the exhaust outlet pipe 42 is open to the atmosphere. The other end of the exhaust outlet pipe 42 may be connected to exhaust treatment equipment (not illustrated) provided outside the fuel cell row.

The other end of the fuel inlet pipe 45 is connected to fuel equipment (not illustrated) that includes a fuel tank, a pressure-regulating valve, and the like. The other ends of the cooling water inlet pipe 44 and the cooling water outlet pipe 46 are connected to cooling equipment (not illustrated) that includes a cooling water tank, a circulation pump, a radiator, and the like.

The power converter 43 is electrically connected to each power box 19 of the fuel cell row via power wirings. That is, power generated by each power generation module 2 of the fuel cell row is output via one power converter 43. By consolidating the power converters 43 into one in this manner, the following effects can be obtained. First, an installation area of the power generation plant can be reduced as compared with a configuration in which the power converter 43 is disposed in each fuel cell system 1. In addition, when a cooling mechanism for the power converter 43 is provided, since only one place needs to be cooled, the configuration of the cooling mechanism is simplified, and cost thereof can be reduced. When more fuel cell systems 1 are coupled, a fuel cell row may be formed on a right side of the external connection module 47 in FIG. 7 in the same manner as on the left side thereof. In this case, the intake inlet pipe 41, the exhaust outlet pipe 42, the fuel inlet pipe 45, the cooling water inlet pipe 44, and the cooling water outlet pipe 46 are respectively branched and connected also to the fuel cell row coupled on the right side. The same applies to the power wirings, and the fuel cell row on the right side is also electrically connected to the power converter 43.

Next, effects obtained by the above fuel cell system 1 and the power generation plant using the same will be described.

The fuel cell system 1 according to the present embodiment including: two power generation modules 2 stacked and disposed in an up-down direction, each of the two power generation modules including an auxiliary machine structure 7 including an auxiliary machine that receives and transmits gas from and to a fuel cell stack 6, a first fuel cell stack 6A connected to one face of the auxiliary machine structure 7 in the up-down direction, and a second fuel cell stack 6B connected to the other face of the auxiliary machine structure 7 in the up-down direction and having a smaller dimension in the up-down direction than the first fuel cell stack 6A. The second fuel cell stack 6B of the upper power generation module 2A is connected to a lower face of the auxiliary machine structure 7 of the upper power generation module 2A, and the second fuel cell stack 6B of the lower power generation module 2B is connected to an upper face of the auxiliary machine structure 7 of the lower power generation module 2B.

With the above configuration, the auxiliary machine structures 7 of the upper and lower power generation modules 2 can be brought closer to a center of the fuel cell system 1 in the up-down direction, in which the two power generation modules 2 are stacked and disposed in the up-down direction. Accordingly, a change in posture of an operator during operations, such as connection of a pipe to the auxiliary machine structure 7, can be prevented.

In the present embodiment, the fuel cell system 1 further including: a pipe module 3 including an intake pipe 8 through which air to be supplied to the power generation module 2 flows, an exhaust pipe 9 through which gas discharged from the power generation module 2 flows, a fuel pipe 11 through which fuel to be supplied to the power generation module 2 flows, and injection unit cooling water pipes 10, 12 through which cooling water for cooling a fuel injection unit 24 flows; and a power recovery module 4 including a power box 19 that recovers power generated by the power generation module 2. The pipe module 3 and the power recovery module 4 are disposed between the two stacked and disposed power generation modules 2. As described above, since the auxiliary machine structures 7 of the upper and lower power generation modules 2 are brought closer to the center in of the fuel cell system 1 in the up-down direction, a length of a pipe that connects the pipe module 3 and the auxiliary machine structure 7 can be reduced.

In the present embodiment, the two power generation modules 2 have a same structure, the upper power generation module 2A is disposed in an upright state, and the lower power generation module 2B is disposed in an inverted state. Accordingly, a manufacturing process and manufacturing cost can be reduced as compared with the case in which a plurality of types of power generation modules 2 are used.

The fuel cell system 1 according to the present embodiment further including: an intake branch pipe 13 that connects the intake pipe 8 and the auxiliary machine structure 7, an exhaust branch pipe 14 that connects the auxiliary machine structure 7 and the exhaust pipe 9, and a fuel branch pipe 15 that connects the fuel pipe 11 and the auxiliary machine structure 7 via the fuel injection unit 24. A height of a connection portion of the auxiliary machine structure 7 included in the upper power generation module 2A with the intake branch pipe 13, the exhaust branch pipe 14, and the fuel branch pipe 15 and a height of a connection portion of the auxiliary machine structure 7 included in the lower power generation module 2B with the intake branch pipe 13, the exhaust branch pipe 14, and the fuel branch pipe 15 from a ground plane of the system are in a range of 400 mm to 1500 mm. Accordingly, deterioration in operability due to a change in posture of an operator during connection operations, maintenance and inspection operations, or the like for each pipe can be prevented.

The fuel cell system 1 according to the present embodiment further including: a frame body 5 that accommodates the power generation module 2 and the pipe module 3, an intake branch pipe 13 that connects the intake pipe 8 and the auxiliary machine structure 7, an exhaust branch pipe 14 that connects the auxiliary machine structure 7 and the exhaust pipe 9, and a fuel branch pipe 15 that connects the fuel pipe 11 and the auxiliary machine structure 7 via the fuel injection unit 24. The intake branch pipe 13, the exhaust branch pipe 14, and the fuel branch pipe 15 are all connected to a front side of the auxiliary machine structure 7 in a top view, and each of the power generation modules 2 is accommodated in the frame body 5 in a state in which the center line of the first fuel cell stack 6A and the second fuel cell stack 6B in the front-rear direction are offset from the center line of the frame body 5 in the front-rear direction, so that a distance between a side face of the auxiliary machine structure 7 on the front side and a side face of the frame body 5 facing the side face is larger than a distance between a side face of the auxiliary machine structure 7 on the rear side and a side face of the frame body 5 facing the side face. Accordingly, routing of the respective pipes such as the intake branch pipe 13 and the exhaust branch pipe 14 can be consolidated on the front side. As a result, a volume of wasted space caused by the routing of the pipes can be reduced.

Although the embodiment of the present invention has been described above, the above embodiment merely exemplifies a part of application examples of the present invention and does not intend to limit the technical scope of the present invention to the specific configuration of the above embodiment.

## Claims

1. A stationary fuel cell system comprising:
two power generation modules stacked and disposed in an up-down direction, each of the two power generation modules including an auxiliary machine structure including an auxiliary machine that receives and transmits gas from and to a fuel cell stack, a first fuel cell stack connected to one face of the auxiliary machine structure in the up-down direction, and a second fuel cell stack connected to the other face of the auxiliary machine structure in the up-down direction and having a smaller dimension in the up-down direction than the first fuel cell stack, wherein
the second fuel cell stack of the upper power generation module is connected to a lower face of the auxiliary machine structure of the upper power generation module, and
the second fuel cell stack of the lower power generation module is connected to an upper face of the auxiliary machine structure of the lower power generation module.

2. The stationary fuel cell system according to claim 1, further comprising:
a pipe module including an intake pipe through which air to be supplied to the power generation module flows, an exhaust pipe through which gas discharged from the power generation module flows, a fuel pipe through which fuel to be supplied to the power generation module flows, and an injection unit cooling water pipe through which cooling water for cooling a fuel injection unit flows; and a power recovery module including a power box that recovers power generated by the power generation module, wherein
the pipe module and the power recovery module are disposed between the two stacked power generation modules.

3. The stationary fuel cell system according to claim 1, wherein
the two power generation modules have a same structure, the upper power generation module is disposed in an upright state, and the lower power generation module is disposed in an inverted state.

4. The stationary fuel cell system according to claim 2, further comprising:
an intake branch pipe configured to connect the intake pipe and the auxiliary machine structure;
an exhaust branch pipe configured to connect the auxiliary machine structure and the exhaust pipe; and
a fuel branch pipe configured to connect the fuel pipe and the auxiliary machine structure via the fuel injection unit, wherein
a height of a connection portion of the auxiliary machine structure included in the upper power generation module with the intake branch pipe, the exhaust branch pipe, and the fuel branch pipe and a height of a connection portion of the auxiliary machine structure included in the lower power generation module with the intake branch pipe, the exhaust branch pipe, and the fuel branch pipe from a ground plane of the system are in a range of 400 mm to 1500 mm.

5. The stationary fuel cell system according to claim 2, further comprising:
a frame body configured to accommodate the power generation modules and the pipe module;
an intake branch pipe configured to connect the intake pipe and the auxiliary machine structure;
an exhaust branch pipe configured to connect the auxiliary machine structure and the exhaust pipe; and
a fuel branch pipe configured to connect the fuel pipe and the auxiliary machine structure via the fuel injection unit, wherein
the intake branch pipe, the exhaust branch pipe, and the fuel branch pipe are all connected to a front side of the auxiliary machine structure in a top view, and
by accommodating each of the power generation modules in the frame body in a state in which a center line of the first fuel cell stack and the second fuel cell stack in a front-rear direction is offset from a center line of the frame body in the front-rear direction, a distance between a side face of the auxiliary machine structure on the front side and a side face of the frame body facing the side face is larger than a distance between a side face of the auxiliary machine structure on a rear side and a side face of the frame body facing the side face.
